# EUROPEAN PATENT APPLICATION

(11) **EP 3 667 533 A1**
(43) Date of publication of application: **17.06.2020**
(21) Application number: 18306654.7
(22) Date of filing: 10.12.2018
(51) Int. Cl.: G06F 21/57, G06F 21/75, G06F 21/77, G06F 21/81

(54) **METHOD FOR SECURING A SYSTEM IN CASE OF AN UNDESIRED POWER-LOSS**

(71) Applicant: Thales Dis France SA, 92190 Meudon (FR)
(72) Inventor: LEPAVEC, Emmanuel, 13881 GEMENOS CEDEX (FR); COULON, Jean-Roch, 13881 GEMENOS CEDEX (FR); VIENNE, Nicolas, 13881 GEMENOS CEDEX (FR); SPYROPOULOS, Evangelos, 13881 GEMENOS CEDEX (FR); CHARLES, Yan, 13881 GEMENOS CEDEX (FR)
(74) Representative: Grevin, Emmanuel

(57) **Abstract**

The present invention relates to a method for securing a system configured to execute sensitive operations, the system comprising a persistent memory unit, and a sensitive operation register, the system further comprising at least one power source, the method comprising the steps of:
- prior to executing a sensitive operation, setting the sensitive operation register,
in case of detection of a loss of all of said power sources:
- checking if the sensitive operation register is set,
if the sensitive operation register is set:
- writing by means of remaining capacitance a power-loss indication in the persistent memory unit.

## Description

### FIELD OF THE INVENTION

The present invention relates to a method for securing system in case of undesired power loss.

The invention also pertains to a system using said method.

### BACKGROUND OF THE INVENTION

Generally, in the field of sensitive operation it is known that secured systems may be vulnerable to rollback and replay attacks, in particular by power loss events, mainly in case of systems being part of mobile terminals. This would prevent the system to carry out security countermeasures when being just in course of conducting a secured operation, like encryption, password check etc. At a chosen point in time, the attacker will cut power source from the system and cause the execution to stop, preventing the security countermeasure to operate. By using this method, the attacker may replay the attack as many times as necessary.

Known measures against power-loss attacks are to carry out a transactional process, as it is known for databases. This requires writing into non-volatile memory each time a sensitive operation is carried out.

The disadvantages of such an approach are, that it requires the availability of sufficient non-volatile memory, which is a cost issue. Further in case of battery driven devices, frequent writings requires more power consumption. Performances are degraded and, finally, the lifetime of the non-volatile memory is severely reduced in case of frequent sensitive operations.

In order to overcome those disadvantages it requires a method that is sufficiently secure but without such shortcomings.

It is therefore the goal of present invention to overcome the mentioned disadvantages and to propose a solution for an improved measure against power-loss attacks for a secured system.

Further alternative and advantageous solutions would, accordingly, be desirable in the art.

### SUMMARY OF THE INVENTION

It is according to a first aspect of the invention suggested a method for securing a system according to claim 1. It is further suggested according to a second aspect of the invention a system according to claim 10.

According to the first aspect of the invention it is proposed a method for securing a system configured to operate sensitive operations, the system comprising a persistent memory unit, and a sensitive operation register, the system further comprising access to at least one power source, the method comprising the steps of:
- prior to executing a sensitive operation, setting the sensitive operation register,
in case of detection of a loss of all of said power sources:
- checking if the sensitive operation register is set,
if the sensitive operation register is set:
- writing by means of remaining capacitance a power-loss indication in the persistent memory unit.

The invention relates to a system for carrying out sensitive operations. Such system is in particular an integrated circuit card, a secure element, or any other type of smart card.

The system is preferably communicatively connected to a device or appliance, that makes use of the system and its secured operations.

The system has access to a power supply, preferably through the connected device or appliance.

Such systems are often target of rollback and replay attacks, which are often started by power loss events.

The invention aims to implement countermeasures against such attacks. For this the method comprises that in the case that a sensitive operation is carried out a sensitive operation register is set to true.

The sensitive operation register is preferably situated in the volatile memory and advantageously accessible for those parts of the system that monitor the system integrity resp. security of the system.

As part of the method it needs to be figured out which of the operations are qualified as sensitive.

According to a preferred embodiment a sensitive operation is at least one of:
- checking of a password,
- checking of a PIN code,
- checking of a signature,
- processing of a secure algorithm,
- memory writing,
- cryptographic operation,
- operation involving secured data.

As it can be seen this relates mainly to security related matters, like authorization, authentication, securing information for communicating over unsecure channels etc.

Preferably it is preconfigured in the operating system to guard each of such sensitive operation with a procedural step that contacts a security module of the operating system and where the setting of the sensitive operation register is - potentially among other steps - carried out.

Preferably the method comprises unsetting the sensitive operation register in case the sensitive operation processing is finished.

With this method step the execution of the sensitive operation is documented as being finished, hence the system is operating as normal.

Hence, when a power loss is detected it is first the sensitive operation register that needs to be checked.

The power loss is preferably detected by a power loss detection unit. This power loss detection unit is triggered by an interrupt or regularly checking the power status.

When the power loss has happened, however the system is not out of service within one moment to another. However, the following steps are sufficiently powered by the remaining internal capacitances in the electronic resp. semiconductor components of the system. With this emergency power source for a few operations may still be carried out.

Obviously this is very limited, both in time and in capacity. Hence it is fundamental to stop all unnecessary operation and concentrate on the security related operation.

The first operation therefore is to check if the sensitive operation register is set. With the remaining capacitance the volatile memory is sufficiently supplied to keep its values for a limited time.

When the sensitive operation register is set, then subsequent steps need to be carried out.

Preferably the sensitive operation register additionally indicates which operation shall be carried out, in case a sensitive operation is in course at the time of power-loss.

The at least one subsequent operation at least comprise that in case the sensitive operation register is set, a power-loss indication is written in the persistent memory unit of the system.

If the sensitive operation register is not set, nothing needs to happen. This is advantageous as this will be for most of the time the normal situation when powering down the system resp. the application with the system. Hence no impact on hardware resources has happened, e.g. in terms of write cycles in flash memory or the like. Further no timing impact is to be expected, in the normal course of operation.

The persistent memory unit is a memory that is able to store values that are held for a certain time without power supply. This comprises permanent memory and semi-permanent memory units. That means in the persistent memory stored data do not immediately disappear upon power down, however, possibly after a while.

The inventive method is advantageous as it requires no additional energy source, like a battery, which is cost effective. Furthermore the additional security integration does merely have no impact on the normal operation of the system and its operation system.

In another embodiment the persistent memory unit is an one-time programmable memory.

Preferably the persistent memory is protected against access from outside, that may overwrite this memory before the next startup of the system. This is in particular achieved through one-time programmable memory (OTP). In such case, memory writes shall be avoided as much as possible, which is very limiting to use this memory for security purpose.

With that embodiment the system has secured, that for the case of a power up the system is aware of the power-loss event during execution of a sensitive operation.

In another preferred embodiment it is suggested what happens in the depicted situation after powering up the system.

It is proposed that upon startup of the system the method comprises the steps of:
- checking for a power-loss indication in the persistent memory unit,
- only in case a power-loss indication is found, carrying out power-loss handling actions.

Consequently it is proposed that after powering up the system needs to check the stored value of the power-loss indication in the persistent memory unit. This is preferably part of the bootstrap software that starts the system before the general operating system is booted. However the bootstrap software needs to have access to the persistent memory unit.

As this is a short check, no impact to the behavior of the system will appear when no power-loss situation during execution of a sensitive operation has been carried out. This is for sure the most often happening situation, hence this security related method has no remarkable impact on the normal operation of the system.

When the check turns out that the power-loss indication is set, the power-loss handling actions are carried out.

In particular such power-loss handling actions comprise at least one of:
- deleting of data stored in the persistent memory unit, in particular the power-loss indication in the persistent memory unit,
- preventing of secured operation for a predetermined period of time,
- forcing arbitrary processing delays,
- sending an event to a remote server,
- logging event to persistent memory unit,
- terminating the system,
- denying of service,
- carrying out a rollback to a previous state,
- completing a pending operation,
- incrementing a counter.

It depends on the type of system and/or sensitive operation which of the power-loss handling actions are carried out. Also it is encompassed by the invention that a combination of these may be appropriately carried out.

Preferably an indication of the sensitive operating is stored with the power-loss indication for the system to figure out which of the power-loss handling operations is preferably executed.

The power-loss handling actions relate to securing consistency of data and the system and to avoid access to sensitive data, as well as avoiding modifications of software.

With the deletion of data stored in the persistent memory it is aimed to secure data from access from an attacker. This might involve keys, certificates, passwords as well as software which could be decompiled.

With the prevention of secured operations or forcing arbitrary processing delays it is aimed to avoid repeated attacks, as the system would then avoid sensitive operations for a given time. This could in the end make the system not usable for that period of time, but discourages further attacks. Denying of service is the extreme variant of this embodiment. On the other end, non-sensitive operations may be carried out.

Consequently a termination of the system, that means shutting down execution, is the final solution for securing the system.

Previously it is useful to provide evidence, either by logging in persistent memory unit, incrementing a counter, or by sending an event to a server, provided communication means are available or at least accessible.

By means of a rollback, if the resources are available, the status of the system is aimed to be brought in a situation before the power-loss. Preferably stop-points are regularly defined for that, which define (and secure) the status to be rolled back at, preferably in the persistent memory. These may lie way before the power-loss, but represent a defined status where no attack had affected the system.

In a preferred embodiment it is proposed the step of storing data comprising at least an extract of the volatile state of the system in the persistent memory unit prior to executing the sensitive operation,
wherein after startup the power-loss handling actions use said stored data to conduct at least one out of:
- detecting if an attack was carried out, or
- restoring the volatile state of the system with said stored data.

This embodiment is in particular useful for systems with low complexity in order to store the volatile state, that means setting of variables of the operating system. Having in mind the remaining capacitance for executing the storing operation this may only be a couple of bytes.

However, if the volatile state could be stored completely, it is advantageous that after it could be figured out if an attack has been carried out or not, that in case no attack has been carried out the system can be set in the status of the operation at the time when the power-loss event has happened.

However this is not applicable in case of a detected attack. Then it is even advantageous to erase the stored volatile state after powering up the system. An attack is in particular identified by monitoring how many power-loss situations have happened recently. For this it is helpful to maintain a power-loss counter in the persistent memory.

According to the second aspect of the invention it is proposed a system for executing sensitive operations, the system comprising a persistent memory unit, a sensitive operation register, at least one power source and a power-loss detection unit, wherein the power-loss detection unit is configured to detect a loss of all of said power sources, wherein the system is configured to set the sensitive operation register prior to executing a sensitive operation, in case of the power-loss detection unit indicating a power-loss, the system is configured to:
- check if the sensitive operating register is set, if the sensitive operation register is set:
- write by means of remaining capacitance a power-loss indication in the persistent memory unit.

The system according to the second aspect of the invention in particular processing circuitry for operating the system. Preferably the power-loss detection unit is part of the operating system executed by the processing circuitry.

Further the system comprises volatile memory and a persistent memory unit.. Additionally the system comprises access to a power source, which is in particular part of an application or device where the system is connected to. In the case of an embedded system the system is embedded in said application. Preferably the system is an integrated circuit card, a secure element, or any other type of smart card, which is configured to carry out secure resp. sensitive operations.

Preferably the system is a secure system. In another preferred embodiment the system is an embedded system. Preferable it is a combination of both.

The second aspect of the invention shares the advantages of the first aspect.

As it is shown this invention advantageously solves the depicted problem and suggests a method and a system that is hardened against attacks by deliberate power loss.

### BRIEF DESCRIPTION OF THE DRAWINGS

The following description and the annexed drawings set forth in detail certain illustrative aspects and are indicative of but a few of the various ways in which the principles of the embodiments may be employed. Characteristics and advantages of the present invention will appear when reading the following description and annexed drawings of advantageous embodiments given as illustrative but not restrictive examples.
- Fig. 1: represents a system of the type to which the present invention is applied as an embodiment;
- Fig. 2: shows in an exemplifying embodiment the chronological sequence of power events on an exemplifying system and the subsequent reaction according to an exemplifying embodiment of the invention;
- Fig. 3: shows a first flow chart depicting behavior according to an exemplifying embodiment in case of power loss;
- Fig. 4: shows in a second flow chart the behavior of powering up after power loss according to an advantageous embodiment of the invention.

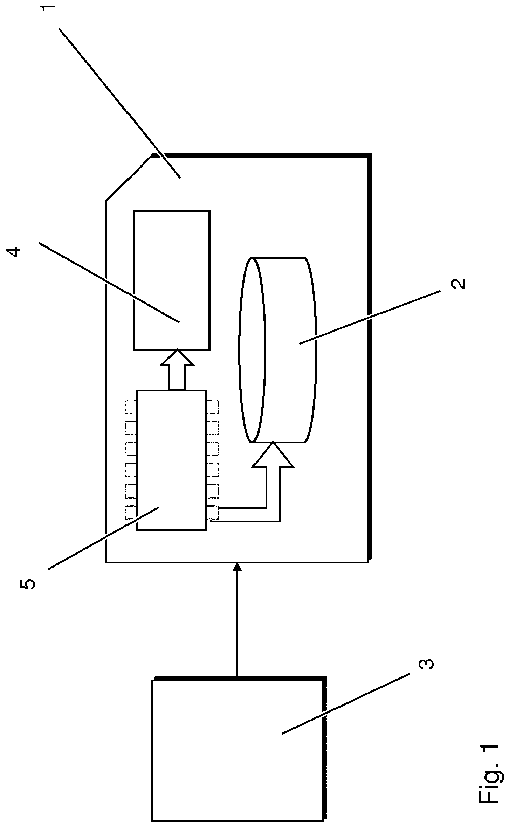

FIG. 1 schematically shows a system 1 of the type to which the present invention is applied as an embodiment. Preferably this relates to a secured system, like a secured element, an integrated circuit card or the like. This is preferably an embedded system.

The system 1 in equipped resp. connected to a power supply 3. That type of power supply is in particular an external power source, like a battery or an external capacitor.

This power supply 3 might in particular be part of a device, where the system is connected to, e.g. a smartphone, or a machine-to-machine application.

The system comprises processing circuitry 5, in particular a CPU or any other processor, which is processing in particular the operating system and other software application, that are in particular stored in the persistent memory unit 2.

The processing circuitry 5 has further access to volatile memory 4.

The processing circuitry 5 of the exemplifying embodiment shown in FIG. 1 comprises additionally a power loss detection unit, which is a software module monitoring the power supply situation.

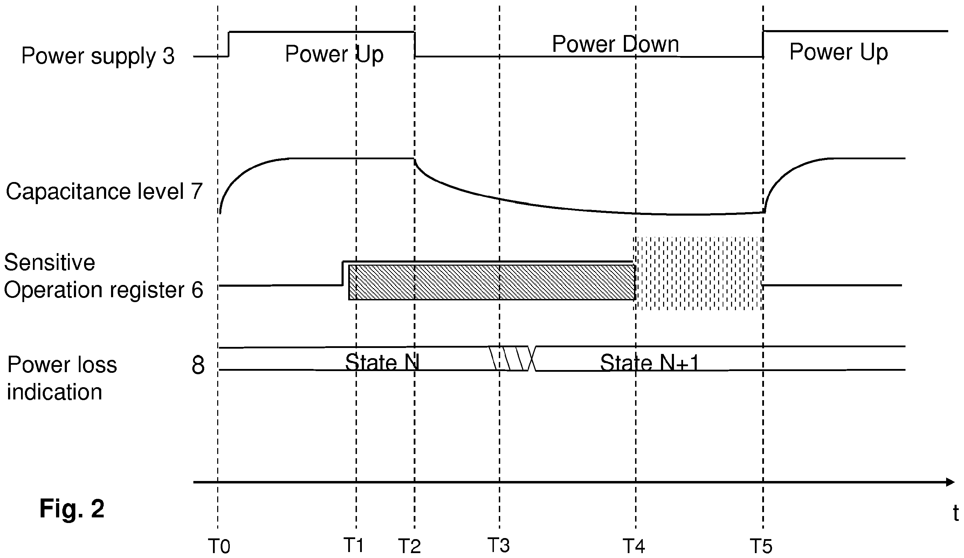

Further the volatile memory 4 comprises a secure operation register, which is set, when the processing circuitry is about to carry out a secure operation. Fig. 2 shown a chronological sequence of events happening and subsequent status in case of a power loss situation of a system 1 as shown in Fig. 1. Shown from up to down are:
First the status of power supply 3. It is either switched on or off, that means it can have only two values.

Below is the capacitance level 7 of the system. That is the power status of the system remaining independent of the power supply, in the electronic and semiconductor components of the system.

Below is the status of sensitive operation register 6, which is in particular part of the volatile memory 4.

Additionally it is shown the status of a power loss indication field 8, preferably stored in the persistent memory unit 2.

All these sequences are happening in parallel along the time bar below.

The sequence starts at time TO with powering up the system 1. In response the capacitance of the system is growing to a certain extent. The sensitive operation register is initialized to 0/false. The power loss indication typically is not touched, but read out. Here it is set to status N, indicating no power loss as reason for the last power down.

At time T1 now the sensitive operation register 6 is set. This is usually initiated by the processing circuitry 5, in response to the detection of a sensitive operation. This may in particular be the case when a password is entered and/or checked. Further de/encryption procedures and the like are preferably tagged as sensitive operations, that means when the sensitive operation is about to start, then the operating system of the system takes care, that the sensitive operation register 6 is set.

When the sensitive operation terminates, the sensitive operation register 6 is unset again. When a power loss is detected when the sensitive operation register is unset, then the system 1 preferably does not do anything special. However at time T2 a power loss is detected, while the sensitive operation register is still set. This may be an attack in order to leave the system in an undefined state, and be vulnerable when powered on again.

Hence, when the situation of a power loss is detected, preferably by a power loss detection unit, e.g. part of the operation system, then it is shown the remaining capacitance level 7. The capacitance is decreasing but it is still some time left to take security measures.

As it is not foreseeable that the sensitive operation may be successfully terminated, instead the power loss indication is set to state N+1. This is done at time T3, that means as long as still enough capacitance is left. Preferably all other operations of the system, including the sensitive operation, are immediately interrupted.

At time T4 the capacitance has reached a value where no operation can be executed and the volatile memory status is undefined. That means the sensitive operation register is not reliable anymore, should the power supply be switched on again.

At time T5 the system is powered up again. Here it is first to check, if the last power down was carried out regularly or suddenly e.g. by disconnecting the power supply. And if the latter was the case, it is further the question if this was during a sensitive operation. If this were the case then security measures need to be taken.

In the shown example at T5 it is first read out the state of the power loss indication. As this was set to N+1, the system resp. the operating system knows that a power loss has happened, and this was during execution of a sensitive operation.

Consequently in that case emergency operations are carried out. What emergency operation is appropriate is in particular depending upon the type of system and the type of sensitive operation.

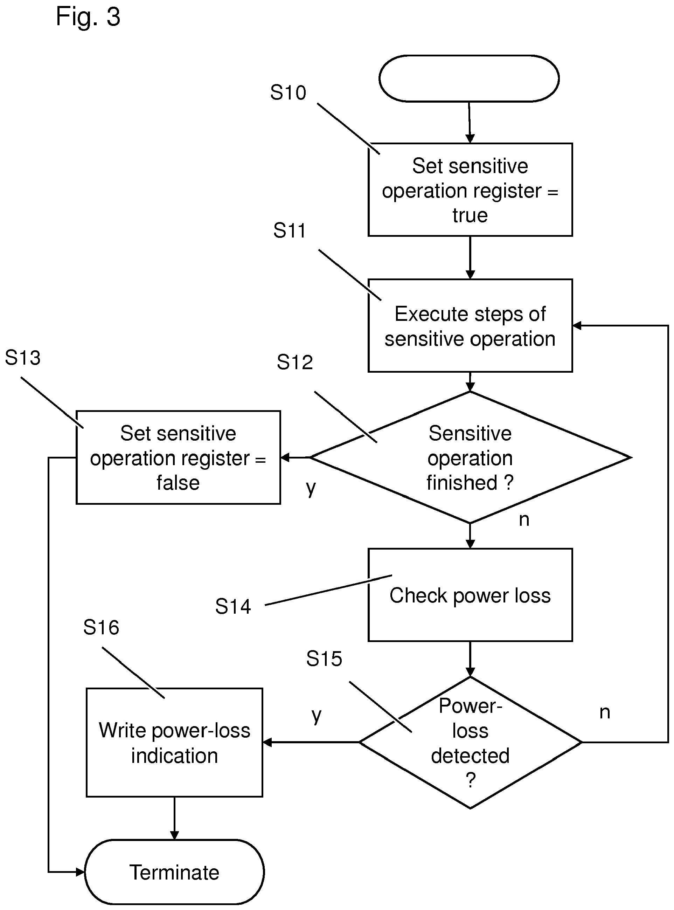

The main goal of the exemplifying embodiment however is to bring the system 1 in the position to detect that emergency operations are necessary to be carried out. Fig. 2 shows, that with this embodiment this goal is achieved. Fig. 3 shows by way of a flow chart another exemplifying embodiment of the invention, in particular what is happening around the power loss situation, that means between time T0 and T4 as shown in Fig. 2.

The procedure starts with step S10 with a system 1 as an exemplifying embodiment of the inventive system, which is operative. The system is about to carry out a sensitive operation, like password check or the like.

Hence, in step S10 the sensitive operation register is set to true. This is a register located in the volatile memory and being accessible at least for the operating system, in particular emergency operation components of the operating system.

When this is done, then in step S11 the operating system of the system 1 commences with carrying out the sensitive operation. As the sensitive operation may take a while, e.g. encryption methods are usually time and/or processing power intensive, anything can happen during that time.

Hence it is regularly checked, in particular as long as the sensitive operation register is set to true, if the sensitive operation is finished, as shown in decision step S12. When this is the case, then the operation branches to step S13, and the sensitive operation register is unset. Hence the operation may terminate, until a new sensitive operation is about to be carried out.

However as long as the sensitive operation is not terminated, then it might happen that a power loss has happened, in step S14.

If this is not the case, the decision step S15 branches back to step S11, that means the next steps of the sensitive operation are carried out.

Otherwise, when a power loss is detected then the process flow branches to S16. Due to the remaining capacitance the system is still able to carry out a few operations. hence the execution of the sensitive operation is terminated, and in step S16 a power-loss indication is written in the non-volatile memory, resp. the persistent memory. This may be the last operation carried out with the remaining and evanescent capacitance of the system. All the more it is important that no time and power is wasted before the power-loss indication is written after detecting the power loss.

This embodiment is only exemplifying and for illustrative purposes showing the way for a sequential operation. In systems allowing parallel operation, the execution of the sensitive operation would preferably be handled by another thread than the power loss handling. In systems allowing an interrupt, the power loss detection would probably be handled as an interrupt and lead to a jump to the power loss handling operation steps like S16.

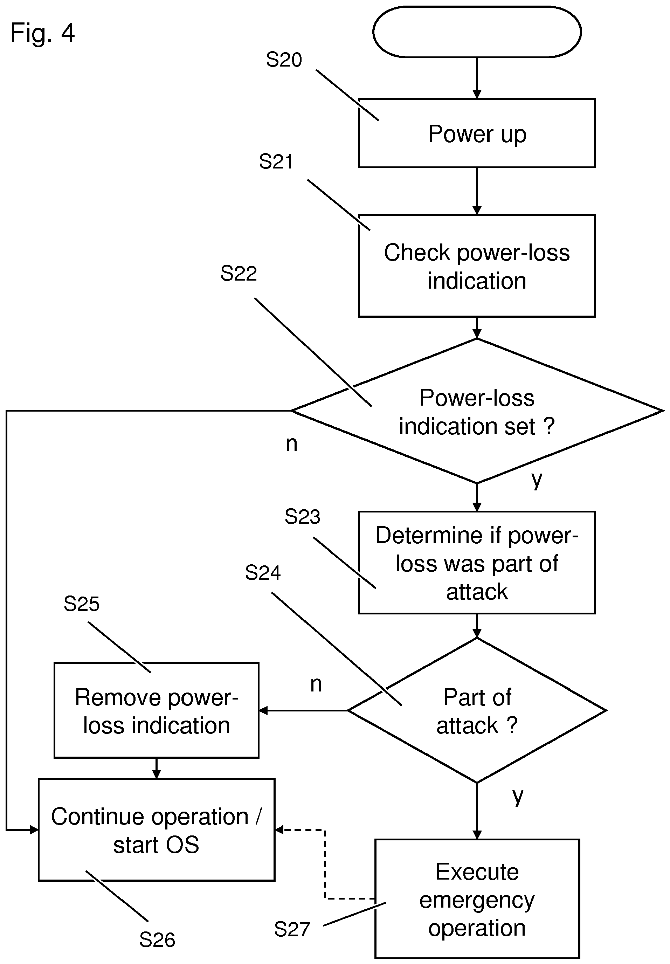

In Fig. 4 it is shown in an exemplifying embodiment of the invention the situation after powering up the system. Preferably the shown operating steps are part of an isolated bootstrap component, that is supposed to start the operating system once it is detected that no attack has happened.

The system's operating system does not know, if an unexpected power-loss has happened. Hence, after powering up in step S20 one of the first operations is to check in step S21 if the power-loss indication in the persistent memory is set to a status indicating that a power-loss has happened while a sensitive operation was carried out.

When the power-loss indication was not set, then the flow branches in step S22 to S26, and continue operating the system, in particular by running the operating system. As part of this step preferably the sensitive operation register is set to false, i.e. as part of the initialisation phase of the operating system.

In the other case the flow branches at step S22 to step S23 where it is determined if the power-loss was part of an attack. In a preferred embodiment the system may in particular be equipped with diagnostic capabilities that can figure out that situation. This is in particular likely when a high amount of power loss situations has happened, and in particular this happened during or timewise close to a sensitive operation.

When the system is able to discriminate between an attack, then it may decide in step S24 if an attack has happened or not. If not the flow branches to step S25, where the power-loss indication is removed from the persistent memory. This is advantageous in order to simplify the next power up situation, as the system would never know how long ago that power-loss situation happened. Further during step S25 if possible the status of the volatile memory may be restored, in case it was possible to store it in the persistent memory after the power-loss was detected and the power-loss indication was written. Preferably another flag indicates if storing the variable status was successful or not. After step S25 was successfully carried out the operation branches to step S26 and the operation system may start.

If the power-loss however was identified as being part of an attack, then the operation branches to step S27.

Here emergency operations are carried out. Such emergency operations may be a couple of measures, depending upon the type of system, availability of periphery and communication means, the type of sensitive operation etc. The easiest way is to terminate the system. Other means may include logging or informing the user by way of user interface or communicating of messages. Depending upon the type of handling, the operation of the system continues, as shown with the dashed arrow, or the system is powered down.

In the above detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the scope of the invention. In addition, it is to be understood that the location or arrangement of individual elements within each disclosed embodiment may be modified without departing from the scope of the invention. The above detailed description is, therefore, not to be taken in a limiting sense, and the scope of the present invention is defined only by the appended claims, appropriately interpreted, along with the full range of equivalents to which the claims are entitled.

## Claims

1. Method for securing a system (1) configured to execute sensitive operations, the system comprising a persistent memory unit (2), and a sensitive operation register (6), the system (1) further comprising access to at least one power source (3), the method comprising the steps of:
- prior to executing a sensitive operation, setting the sensitive operation register (6),
in case of detection of a loss of all of said power sources:
- checking if the sensitive operation register (6) is set,
if the sensitive operation register (6) is set:
- writing by means of remaining capacitance a power-loss indication in the persistent memory unit (2).

2. Method according to claim 1,
wherein upon startup of the system (1) the method comprises the steps of:
- checking for a power-loss indication in the persistent memory unit (2),
- only in case a power-loss indication is found, carrying out power-loss handling actions.

3. Method according to claim 2,
further comprising the step of storing data comprising at least an extract of the volatile state of the system (1) in the persistent memory unit (2) prior to executing the sensitive operation,
wherein after startup the power-loss handling actions use said stored data to conduct at least one out of:
- detecting if an attack was carried out, or
- restoring the volatile state of the system (1) with said stored data.

4. Method according to at least one of the claims 2 or 3,
wherein such power-loss handling actions comprise at least one of:
- deleting of data stored in the persistent memory unit (2), in particular the power-loss indication in the persistent memory unit (2),
- preventing of secured operation for a predetermined period of time,
- forcing arbitrary processing delays,
- sending an event to a remote server,
- logging event to persistent memory unit (2),
- terminating the system (1),
- denying of service,
- carrying out a rollback to a previous state,
- completing a pending operation,
- incrementing a counter.

5. Method according to at least one of the previous claims
wherein the system (1) is a secure system.

6. Method according to at least one of the previous claims
wherein the system (1) is an embedded system.

7. Method according to at least one of the previous claims
comprising unsetting the sensitive operation register (6) in case the sensitive operation processing is finished.

8. Method according to at least one of the previous claims,
wherein the sensitive operation is at least one of:
- checking of a password,
- checking of a PIN code,
- checking of a signature,
- processing of a secure algorithm,
- memory writing,
- cryptographic operation,
- operation involving secured data.

9. Method according to at least one of the previous claims,
wherein the persistent memory unit (2) is an one-time programmable memory.

10. System (1) for executing sensitive operations,
the system (1) comprising a persistent memory unit (2), a sensitive operation register (6),
access to at least one power source and a power-loss detection unit, wherein the power-loss detection unit is configured to detect a loss of all of said power sources,
wherein the system (1) is configured to set the sensitive operation register (6) prior to executing a sensitive operation,
in case of the power-loss detection unit indicating a power-loss, the system is configured to:
- check if the sensitive operating register (6) is set,
if the sensitive operation register (6) is set:
- write by means of remaining capacitance a power-loss indication in the persistent memory unit (2).

11. System (1) according to claim 10,
further configure upon startup of the system (1) to:
- check for a power-loss indication in the persistent memory unit (2),
- only in case a power-loss indication is found, carry out power-loss handling actions.

12. System (1) according to claim 11,
further configured to store data comprising at least an extract of the volatile state of the system (1) in the persistent memory unit (2) prior to executing the sensitive operation,
wherein after startup the system (1) is configured that said power-loss handling actions use said stored data to conduct at least one out of:
- detection if an attack was carried out, or
- restoration of the volatile state of the system (1) with said stored data.

13. System (1) according to claim 11 or 12,
wherein such power-loss handling actions comprise at least one of:
- deleting of data stored in the persistent memory unit (2), in particular the power-loss indication in the persistent memory unit (2),
- preventing of secured operation for a predetermined period of time,
- forcing arbitrary processing delays,
- sending an event to a remote server,
- logging event to persistent memory unit (2),
- terminating the system (1),
- denying of service,
- carrying out a rollback to a previous state,
- completing a pending operation,
- incrementing a counter.

14. System (1) according at least one of the claims 10 to 13,
further configured to unset the sensitive operation register (6) in case of finishing the sensitive operation processing.

15. System (1) according to at least one of the claims 10 to 14,
wherein the sensitive operation is at least one of:
- checking of a password,
- checking of a PIN code,
- checking of a signature,
- processing of a secure algorithm,
- memory writing,
- cryptographic operation,
- operation involving secured data.
